(19) Europäisches Patentamt / European Patent Office / Office européen des brevets

(11) **EP 4 105 628 B1**

(12) **EUROPEAN PATENT SPECIFICATION**

(45) Date of publication and mention of the grant of the patent:
**31.07.2024 Bulletin 2024/31**

(21) Application number: **22179189.0**

(22) Date of filing: **15.06.2022**

(51) International Patent Classification (IPC):
*G01M 3/18* (2006.01)    *G01M 3/38* (2006.01)
*G01N 23/00* (2006.01)    *G01N 23/09* (2018.01)

(52) Cooperative Patent Classification (CPC):
**G01M 3/38; G01M 3/18; G01N 23/09**

(54) **METHOD AND SYSTEM FOR SEARCHING FOR LEAKS IN PIPELINES FOR TRANSPORT OF HYDROCARBONS, OR OF SUBSTANCES CONTAINING HYDROCARBONS, BASED ON SECONDARY COSMIC RADIATION MEASUREMENTS**

VERFAHREN UND SYSTEM ZUM SUCHEN VON LECKS IN ROHRLEITUNGEN FÜR DEN TRANSPORT VON KOHLENWASSERSTOFFEN ODER VON KOHLENWASSERSTOFFHALTIGEN SUBSTANZEN AUF DER BASIS SEKUNDÄRER KOSMISCHER STRAHLUNGSMESSUNGEN

PROCÉDÉ ET SYSTÈME DE RECHERCHE DE FUITES DANS DES PIPELINES DE TRANSPORT D'HYDROCARBURES, OU DE SUBSTANCES CONTENANT DES HYDROCARBURES, SUR LA BASE DE MESURES DU RAYONNEMENT COSMIQUE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**KH MA MD TN**

(30) Priority: **17.06.2021 IT 202100015920**

(43) Date of publication of application:
**21.12.2022 Bulletin 2022/51**

(73) Proprietor: **Cosmic S.r.l.**
**04100 Latina (IT)**

(72) Inventors:
• **MARCHETTO, Riccardo**
**04100 LATINA (IT)**
• **MICHELINI, Giuseppe**
**04100 LATINA (IT)**

(74) Representative: **Studio Torta S.p.A.**
**Via Viotti, 9**
**10121 Torino (IT)**

(56) References cited:
**EP-A1- 3 767 045    US-A- 2 940 302**
**US-A- 5 543 623**

• **CHRISMAN B. ET AL: "Quantifying mesoscale soil moisture with the cosmic-ray rover", vol. 17, no. 12, 17 December 2013 (2013-12-17), pages 5097 - 5108, XP055837272, Retrieved from the Internet <URL:https://hess.copernicus.org/articles/17/5097/2013/hess-17-5097-2013.pdf> DOI: 10.5194/hess-17-5097-2013**
• **SCHRÖN MARTIN ET AL: "Improving calibration and validation of cosmic-ray neutron sensors in the light of spatial sensitivity", vol. 21, no. 10, 6 October 2017 (2017-10-06), pages 5009 - 5030, XP055825812, Retrieved from the Internet <URL:https://hess.copernicus.org/articles/21/5009/2017/hess-21-5009-2017.pdf> DOI: 10.5194/hess-21-5009-2017**

**Description**

## CROSS-REFERENCE TO RELATED APPLICATIONS

This Patent Application claims priority from Italian Patent Application No. 102021000015920 filed on June 17, 2021.

## TECHNICAL SECTOR OF THE INVENTION

The present invention relates to the search for leaks in gas pipelines, methane pipelines, oil pipelines and, more generally, in pipelines for the transport (e.g., collection and/or transit and/or distribution) of hydrocarbons or of substances containing hydrocarbons in a liquid or gaseous state such as, for example, natural or artificial gas, methane, crude oil or derivative products thereof (e.g., combustible mixtures), etc.

In particular, the present invention relates to a method and system for searching for leaks in pipelines for transport of hydrocarbons, or of substances containing hydrocarbons, based on secondary cosmic radiation measurements.

## BACKGROUND

As is well known, leaks in a pipeline for transport of hydrocarbons or of substances containing hydrocarbons, for example a gas pipeline, a methane pipeline or an oil pipeline, represent a serious problem, both in economic terms, since they entail economic damage to the administration/body/company operating the pipeline and from an environmental point of view, since they entail the waste of a precious resource that has harmful effects on the environment and climate and contributes to the formation of tropospheric ozone, a powerful local air pollutant that in turn causes serious health problems. The timely detection (and therefore repair) of leaks in pipelines for transport of hydrocarbons or of substances containing hydrocarbons therefore contributes to both slowing down climate change and to improving air quality. Furthermore, in the case of gas pipelines, there is also the problem connected with the danger of the leaks. In fact, gas leaks (or leakages) can lead to serious problems for the safety of the community or for the stability of the buildings or infrastructure adjacent to the damaged pipings.

A leak in a pipeline for transport of hydrocarbons or of substances containing hydrocarbons may have several causes, such as a hole in a piping, or a break to a decompression chamber, or the rupture of a connection joint between pipes, etc.

In order to detect leaks of certain types of hydrocarbons, the well-known technique of odorisation is used, which consists of adding other substances with a penetrating odour to odourless or almost odourless substances (e.g. methane) in order to make the presence of the former detectable. For example, in the case of methane, odorisation means the introduction into the gas, which in itself has no odour, of an odorising substance that gives the gas a characteristic odour such that its presence can be perceived in the air before explosive and toxic conditions are created.

Generally, the pipelines for transport of hydrocarbons or of substances containing hydrocarbons are constantly monitored (for example by dedicated personnel and/or through the use of passive and/or active type monitoring systems) in order to detect any leaks.

In particular, currently the search and detection of leaks in a pipeline for transport of hydrocarbons or of substances containing hydrocarbons are typically carried out with the following methods, used individually or in combination with each other:

- by vehicles/aircraft equipped with special tools (e.g. funnel suction probes or belt suction probes);
- on foot with special portable instrumentation able to identify the odorising agent added to the hydrocarbons.

Once a potential leak has been pre-located, a team of specialised operators equipped with special portable instrumentation can then be dispatched in order to locate the actual point of escape of the hydrocarbon, i.e. of the substance containing hydrocarbons.

Instead, in the case of pipelines for the transport of fuel oil, the only solution for detecting leaks is to capture the "noise" generated by a leak that is identified through acoustic equipment called geophones, which amplify the noise generated. In this case, however, the search for any leaks necessarily requires running, metre by metre, the entire path along which the pipeline extends.

In addition, there also exist methods based on the use of tracer gases, for example an inert gas formed by a mixture of hydrogen (5%) and nitrogen (95%) which is detectable by a suitable instrument at the spot where gas leaks out.

In addition, for the search for leaks of hydrocarbons or of substances containing hydrocarbons, sometimes the so-called "step tests" are also used, that is, particular tests (generally performed at night) that provide for a selective search for leaks on individual sectors of the pipeline (through the appropriate closure of specific valves).

All the aforementioned methods involve very long search times, are invasive for the end user and above all do not provide optimal results, since they do not allow to drastically reduce the presence of leaks; moreover, the technique considered as the most effective, that is, the one that envisages using electronic "noses" (i.e. electronic devices) for the detection of odorants, is not useful both in cases where the pipelines extend below a road surface made with hermetic surfaces (e.g., cemented basalt, cement slabs, etc.), and for all the systems of distribution/transport of hydrocarbons or of substances containing hydrocarbons that do not provide for the addition of odorizing agents (for example in the case of fuel oil or fuel).

Therefore, to date there is no tool or methodology for searching for leaks in pipelines for transport of hydrocarbons or of substances containing hydrocarbons that is applicable to all types of hydrocarbons or substances containing hydrocarbons.

Furthermore, the aforesaid methods also involve rather expensive searching costs. For example, assuming a search for leaks to be carried out in a gas pipeline stretching about 500 km, with the aforesaid known methods/techniques, which are generally characterised by a search cost that can range from 36 to 200 € per km, one would reach a total search cost of between €18,000 and €100,000.

Moreover, additional techniques for remote detection of leaks in pipelines for transport of hydrocarbons or of substances containing hydrocarbons have also been developed in recent years. For example, EP 1 416 258 A1 discloses a technique for detecting leaks in a pipeline for the transport of natural gas by processing remotely sensed images from sensors installed on board satellites and/or aircraft. These techniques have made it possible to increase the efficiency and the effectiveness of the search for and of identification of the leaks of hydrocarbons or of substances containing hydrocarbons, making it possible to reduce search times and costs, although they present, however, some technical limitations/problems related to the actual ability of the signals used for remote sensing to be able to penetrate the soil and/or, for example in high-density urban contexts, even to be able to reach the soil.

In any case, despite this improvement in performance, today there is still a strong need today for new technologies, applicable anywhere and to any type of hydrocarbons or of substances containing hydrocarbons, which allow to further reduce the times and costs of searching for leaks in a pipeline for transport of hydrocarbons or of substances containing hydrocarbons.

Furthermore, US 5 543 623 A describes a method for detecting underground contamination by organic fluids that employs a plurality of spaced apart wells adjacent to a region to be tested for contamination. A neutron backscatter meter is introduced into each of the wells to measure the concentration of hydrogen in the soil surrounding the well. Such measurements are made at a plurality of elevations spaced along said wellbore and the distribution of the hydrogen concentration as a function of the elevation is compared with the predicted distribution of hydrogen from underground hydrogen sources, in order to distinguish contamination of the organic fluid from other hydrogen sources. Moreover, this method can also be used to search for leaks in pipelines for transport of hydrocarbons or of substances containing hydrocarbons.

US 2 940 302 A also describes a similar method based on neutron measurements for identifying leaks in pipelines for transport of hydrocarbons.

Finally, EP 3 767 045 A1 describes a method and a system for searching for water leaks based on secondary cosmic radiation measurements.

## OBJECT AND SUMMARY OF THE INVENTION

In view of the foregoing, object of the present invention is, therefore, to provide an innovative technology for searching for, and detecting, leaks in pipelines for transport of hydrocarbons or of substances containing hydrocarbons that is applicable to any type of hydrocarbon or of substance containing hydrocarbons and that enables further reduction in times and costs of searching for leaks, increases the reliability and accuracy of the search, and drastically reduces the presence of leaks.

Additionally, a further object of the present invention is to provide a technical solution that can be exploited synergistically with currently known methods/techniques for searching for leaks in pipelines for transport of hydrocarbons or of substances containing hydrocarbons.

These and other objects are achieved by the present invention as it relates to a method and a system for searching for leaks in pipelines for transport of hydrocarbons or of substances containing hydrocarbons, as defined in the appended claims.

In particular, the present invention concerns a method for searching for leaks in pipelines for transport of hydrocarbons or of substances containing hydrocarbons, comprising:

- acquiring georeferencing data of a pipeline for transport of hydrocarbons or of substances containing hydrocarbons and data indicative of georeferenced secondary cosmic radiation measurements carried out in a region of the earth's surface in which said pipeline extends;
- performing a processing of the acquired data and generating, based on the processing performed, a georeferenced digital map representing the pipeline for transport of hydrocarbons or of substances containing hydrocarbons and estimated quantities of hydrogen present on/in the soil in the region in which said pipeline extends; and
- detecting and locating one or more leaks in the pipeline for transport of hydrocarbons or of substances containing hydrocarbons based on the generated georeferenced digital map.

## BRIEF DESCRIPTION OF THE DRAWINGS

In order to better understand the present invention, some preferred embodiments, provided for merely exemplary and non-limiting purposes will now be shown with reference to the enclosed drawings (not in a scale), wherein:

- Figure 1 schematically shows a top level architecture example of a measurement device according to a preferred embodiment of the present invention;

- Figure 2 schematically shows a method for searching for leaks in a pipeline for transport of hydrocarbons or of substances containing hydrocarbons according to a preferred embodiment of the present invention;
- Figure 3 schematically shows an example of an operating principle that can be used to estimate the hydrogen content present on/in the soil based on secondary cosmic radiation measurements;
- Figure 4 shows an example of a georeferenced digital map generated by implementing the method of Figure 2; and
- Figure 5 schematically shows a system for searching for leaks in pipelines for transport of hydrocarbons or of substances containing hydrocarbons according to a preferred embodiment of the present invention.

## DETAILED DESCRIPTION OF PREFERRED EMBODIMENTS OF THE INVENTION

The following description is provided to enable a person skilled in the art to make and use the invention. Various modifications to the embodiments set forth will be immediately clear to the persons skilled in the art and the general principles herein disclosed may be applied to other embodiments and applications without, however, departing from the protection scope of the present invention as defined in the enclosed Claims.

The present invention stems from the Applicant's innovative idea to exploit secondary cosmic radiation measurements to search for, and to detect, leaks in pipelines for transport of hydrocarbons or of substances containing hydrocarbons (e.g., gas pipelines, methane pipelines, oil pipelines, etc.).

As known, cosmic rays are energy particles coming from the outer space, which the earth is exposed to as well as any other celestial body. Their origin is very diverse: the Sun, the other stars, energy events such as novas and supernovas, as well as remote objects such as quasars.

The majority of the cosmic rays arriving at the earth's surface is a secondary product of swarms formed in the atmosphere by primary cosmic rays, with interactions that typically produce a cascade of secondary particles starting from a single energy particle of primary cosmic radiation (which may include protons, helium nuclei, electrons, photons, neutrinos, positrons, and antipositrons).

In particular, once they arrive at the earth's atmosphere, the particles of primary cosmic radiation interact with the nuclei of the molecules of the atmosphere thus forming, in a cascade process, new atomic and subatomic particles (e.g. electrons, positrons, neutrinos, pions, muons and neutrons) directed towards the earth, which take the name of secondary cosmic rays (or secondary cosmic radiation).

The secondary cosmic radiation particles are spread over a given energy spectrum, and once arrived on the earth, they interact in different ways with the various elements present in the soil. In particular, a part of such energy particles (for instance neutrons) are more or less sensitive, depending on the respective energy band, on the presence of hydrogen in/on the soil (in fact, the interactions between hydrogen and the secondary cosmic radiation particles that will be discussed below occur both when the hydrogen is on the surface of the soil, and when it is below it - moreover, a leak of hydrocarbons from an underground pipeline could also emerge on the surface).

Specifically, the hydrogen contained in the hydrocarbon chains and present on/in the soil produces a moderating and absorbent effect on neutrons (as it is well known in the nuclear engineering field, whose technologies and knowledges on neutrons are now being widely recognised).

Therefore, based on secondary cosmic radiation measurements (conveniently, secondary cosmic ray neutron measurements) carried out at various locations on the earth's surface, it is possible to determine/estimate quantities of hydrogen present in/on the soil and thus detect the presence of any leaks/dispersions of hydrocarbons or of substances containing hydrocarbons.

In fact, having georeferencing data available for a pipeline for transport of hydrocarbons or of substances containing hydrocarbons (for example, one or more georeferenced pipeline maps), it is possible to:

- generate, based on said pipeline georeferencing data and data indicative of georeferenced secondary cosmic radiation measurements carried out in a region of the earth's surface in which said pipeline extends, a georeferenced digital map showing said pipeline and estimated quantities of hydrogen present on/in the soil in the region in which said pipeline extends; and, therefore,
- identify (i.e. detect) and locate any leaks in the pipeline for transport of hydrocarbons or of substances containing hydrocarbons based on the georeferenced digital map (conveniently, based on an analysis of the estimated quantities of hydrogen present on/in the soil indicated in the georeferenced digital map at or near said pipeline).

Suitably, secondary cosmic radiation measurements are performed in proximity to the soil to increase the measurement accuracy (e.g., the measurements may be conveniently performed by means of measurement devices that are fixed and/or installed on vehicles moving in the region in which the pipeline extends). In this regard, it should be noted that, as the height from the soil at which the measurements are made increases, the accuracy of detection of the hydrogen content in/on the soil decreases, that is, the reliability and the accuracy of detection of leaks of hydrocarbons or of substances containing hydrocarbons. In any case, it is also important to note that, with the inevitable advancement of the measurement technologies that will take place in the near future, the height from the soil at which secondary cosmic radiation measurements can be made could also increase, guaranteeing, in any case, a high level of reliability and accuracy of leak detection (for example, in the future it may be possible to perform the measurements also by means of drones flying at low altitude on the region where the pipeline for transport of hydrocarbons or of substances containing hydrocarbons extends).

Unlike systems wherein neutrons are actively generated by radioactive sources such that different problems must be taken into account (e.g. high radioactivity, soil destruction, invasive approach, limited action range), the secondary cosmic radiation (and consequently its particles as well, among which neutrons) is, by nature, always present on the earth's surface.

As previously explained, once reached the earth atmosphere, primary cosmic rays generate high-energy neutrons that propagate to the earth being moderated by the air. The hydrogen present on/in the soil, due, for example, to a leak in a pipeline for transport of hydrocarbons or of substances containing hydrocarbons, has a greater moderating effect than air. These processes lead to a neutron density in the air representing an average of the hydrogen abundance (and therefore of hydrocarbons) in the soil and in the air and that can be sampled locally by means of neutron-sensitive sensors.

In particular, the presence of hydrocarbons or of substances containing hydrocarbons (and thus hydrogen) in/on the soil predictably reduces the quantity of neutrons measurable in the unit of time. Therefore, the quantity of hydrocarbons or of substances containing hydrocarbons in/on the soil can be estimated by monitoring the quantity of neutrons in the air.

Regarding the energy spectrum of the neutrons of secondary cosmic rays, it must be noted that:

- high-energy neutrons (approximately, greater than 1 MeV) are relatively insensitive to the hydrogen;
- at lower energies (indicatively, between 1eV and 1 MeV), hydrogen (and therefore hydrocarbons or substances containing hydrocarbons) can effectively moderate neutrons;
- thermal neutrons (indicatively, with energy less than 1 eV) are slow and also sensitive to other elements/chemical compounds/ materials.

In this regard, it is worth drawing the attention to the fact that the above-mentioned extremes of the various energy bands are purely indicative. In fact, it is possible that, with future technological processes (and/or new scientific discoveries), the value ranges of the various energy bands may vary and/or the measurements may focus on one or more specific sub-ranges of one or more specific energy bands.

Therefore, in order to determine/estimate the quantity of hydrocarbons or of substances containing hydrocarbons, i.e. of hydrogen, present on/in the soil in a given region of the earth's surface where there is also a pipeline for transport of hydrocarbons or of substances containing hydrocarbons, it is possible to use one or more measurement devices which are:

- installed

  - in a fixed manner in respective positions in said region of the earth's surface and/or
  - on-board vehicles that move in said region (for instance, vehicles specifically and merely intended for this measuring service, or vehicles intended for other services (e.g. waste collection, public transport, roadside assistance, etc.) advantageously exploited also for this measuring service) or aircrafts (e.g. drones) flying (for instance at a low altitude) on said region;

- configured to perform secondary cosmic radiation measurements - conveniently, secondary cosmic ray neutron measurements (e.g., by means of one or more CRNS-type sensors, acronym for "*Cosmic Ray Neutron Sensing*" or "*Cosmic Ray Neutron Sensor*") - more conveniently, to measure quantities of neutrons in the intermediate energy domain, i.e., with energy between approximately 1 eV and 1 MeV; and
- configured to store data indicative of the measurements carried out (in particular, indicative of the results of said measurements).

Preferably, measurement devices also comprise:

- a GNSS satellite locating device (for instance of the GPS, Galileo, GLONASS type, etc.) to determine the position (in the case of fixed measurement device) or the positions (in the case of a measurement device installed on a vehicle) - and, conveniently, even the time (i.e. date and hour) - when secondary cosmic radiation measurements are carried out;
- an electronic control unit programmed to georeference the secondary cosmic radiation measurements carried out, based on data provided by the satellite locating device and to store (for instance, on a data storage duly provided in the measurement device) data indicative of the georeferenced secondary cosmic radiations carried out; and,
- conveniently, also a radio-communication device (for instance, based on GSM/GPRS/UMTS/LTE/5G or wi-fi technology) for transmitting data indicative of the measures carried out (for instance, to a processing central system) and/or for remotely controlling the measurements carried out and/or, more generally, for remotely controlling the measurement device.

As will be hereinafter explained, it might be convenient to further provide measurement devices with atmospheric pressure and air humidity sensors such to further associate corresponding atmospheric pressure and air humidity data to the georeferenced measurements.

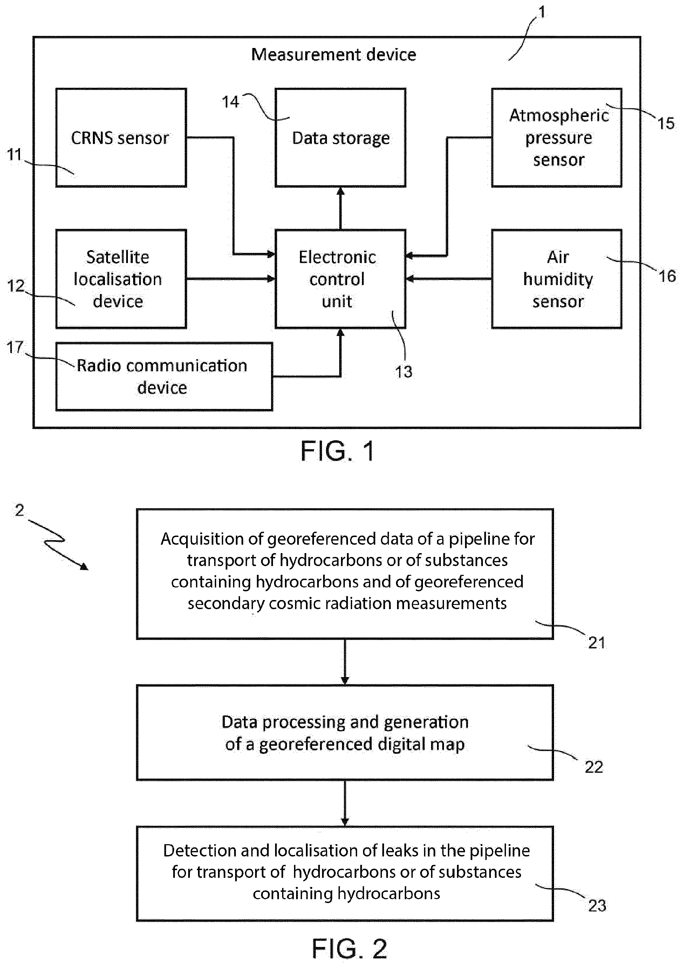

In this regard, Figure 1 schematically shows an example of a top level architecture of a measurement device (denoted as a whole with 1) according to a preferred (but absolutely not limiting, nor binding) embodiment of the present invention.

In particular, as shown in Figure 1, the measurement device 1 comprises a CRNS sensor 11, a satellite locating device 12, an electronic control unit 13, a data memory 14, an atmospheric pressure sensor 15, an air humidity sensor 16 and a radio communication device 17. Such components of the measurement device 1 are obviously configured to operate as above explained.

Conveniently, the CRNS 11 sensor is configured to:

- carry out neutron measurements in a predefined energy range; and
- guarantee a substantially constant detection efficiency in said predetermined energy range, which makes it unnecessary for signal correction factors to be weighed on the different energy levels (for example, $^3$He-moderated sensors are able to guarantee this requirement).

Furthermore, the measurement device 1 may conveniently comprise an air temperature sensor (not shown in Figure 1) in order to acquire also temperature data corresponding to measurements carried out by the CRNS sensor 11.

It is worth noting that the satellite locating device may also not be provided for fixed measurement devices, for which determining the measurement device position during installation may be sufficient.

Thanks to the use of said measurement devices it is possible to create one or more databases containing data indicative of the georeferenced secondary cosmic radiation measurements carried out by all the employed measurement devices. Conveniently, the database(s) may also include data indicative of the date and time of each measurement performed and, even more conveniently, the corresponding atmospheric pressure and air humidity data.

For a better understanding of the present invention, Figure 2 schematically shows a method for searching for leaks in a pipeline for transport of hydrocarbons or of substances containing hydrocarbons (denoted in its entirety by 2) according to a preferred embodiment of the present invention, wherein said pipeline for transport of hydrocarbons or of substances containing hydrocarbons may be a pipeline of any type (e.g., a gas pipeline, a methane pipeline, an oil pipeline, etc.).

As shown in Figure 2, the method 2 includes:

- acquiring georeferencing data of a pipeline for transport of hydrocarbons or of substances containing hydrocarbons and data indicative of georeferenced measurements of secondary cosmic radiation performed in a region of the earth's surface in which said pipeline extends (block 21);
- performing a processing of the acquired data and generating, based on the processing performed, a georeferenced digital map representing the pipeline for transport of hydrocarbons or of substances containing hydrocarbons and estimated quantities of hydrogen present on/in the soil in the region in which said pipeline extends (block 22); and
- detecting and locating one or more leaks in the pipeline for transport of hydrocarbons or of substances containing hydrocarbons based on the generated georeferenced digital map (block 23).

Conveniently, the step of detecting and locating leaks in the pipeline for transport of hydrocarbons or of substances containing hydrocarbons (block 23) is based on an analysis of the georeferenced digital map, wherein this analysis is aimed at identifying the areas in which the pipeline for transport of hydrocarbons or of substances containing hydrocarbons (or which are immediately adjacent to the pipings of said pipeline) passes and wherein the estimated quantities of hydrogen present on/in the soil are high (for example, they are greater than one or more predefined thresholds indicative of, or calculated based on, an average quantity of hydrogen present on/in the surrounding soil and/or an average of the quantities of hydrogen present on/in the soil estimated in the past for the same position).

Conveniently, data processing (Block 22) includes estimating the quantities of hydrogen present on/in the soil in the region where the pipeline for transport of hydrocarbons or of substances containing hydrocarbons extends based on the data indicative of the georeferenced secondary cosmic radiation measurements taken in said region, using correction factors of the measurements that suitably take into account the following variables:

- radial sensitivity - the majority of neutrons measured reproduce the soil as much faithfully as the distance of the measurement device diminishes;
- anisotropy - presence of roads as well as different types of soils, etc.;
- air humidity - air, due to its hydrogen content, influences the presence of detectable neutrons;
- presence of vegetation - depending on the vegetation height the neutron count varies (as the height increases, the count diminishes);
- atmospheric pressure - depending on the atmospheric pressure the neutron count varies (if the pressure diminishes, the count increases; in fact, when the pressure is lower, the lower air density allows neutrons to cover longer distances among collisions);

- intensity of incident secondary cosmic radiation - a generally accepted approach assumes a similarity between the incident high-energy component and the dynamics of the incident neutrons.

In this respect, it is worth mentioning that the variation in the number of neutrons generated by the secondary cosmic rays does not only depend on the hydrogen present in/on the soil, but is also influenced by the variation in the cosmic ray flux itself and by environmental parameters such as pressure and humidity.

In particular, the variation of the incident flux of secondary cosmic rays depends mainly on the solar cycle over a time span of about 7 years. In the short term there may be bursts due to solar storms or supernovae explosions, but fortunately they cause variations by a few percentiles and thus do not significantly alter the number of neutrons related to the presence of hydrogen in/on the soil. Conversely, environmental parameters, such as pressure and humidity, can cause significant variations (e.g. +/- 300) even in narrow time ranges (e.g. 12h), as in the case of the arrival of a deep depression area that causes atmospheric pressure to drop rapidly.

In contrast to the secondary cosmic ray flux, pressure and humidity are easily measurable and their contribution can therefore be corrected.

For example, in order to correct the contribution of atmospheric pressure, the following mathematical formula may conveniently be used:

$$N_p = N_0 \cdot e^{B(p - p_{ref})},$$

where $N_p$ denotes the number of neutrons obtained after correction of the contribution of atmospheric pressure, $N_0$ denotes the raw number of neutrons obtained based on secondary cosmic radiation measurements (in particular the neutron count measurements), $p$ denotes atmospheric pressure, $B = 0,0076$ and $p_{ref}$ denotes an average reference pressure relative to the altitude at which one is located (e.g. $p_{ref} = 1013,25$hPa above sea level).

As far as air humidity is concerned, on the other hand, its contribution can be corrected using the mathematical formula:

$$N = N_p \cdot (1 + A \cdot h),$$

where $N$ denotes the number of neutrons obtained after correction of both the atmospheric pressure contribution and the air humidity contribution, $A = 0,0054$ and $h$ denotes the absolute humidity expressed in g/m$^3$. For the calculation of the absolute humidity, it is necessary to know the relative humidity and the air temperature, two parameters that are, however, easily measurable by any weather station.

Moreover, the maximum distance at which a certain percentage of the neutrons detected originates is a function not only of the quantity of hydrogen present in/on the soil (hence the possibility of tracing back the leaks of hydrocarbons or of substances containing hydrocarbons from the pipelines), but also of the humidity of the air (in particular, in dry air, the maximum distance increases).

Furthermore, the depth in the soil reached by a certain percentage of the neutrons detected is a function of the hydrogen content in the soil itself.

In the past, these conclusions were the result of studies conducted through numeric methods, integrating the function which describes the number of detected neutrons coming from an area placed at a predefined distance from the probe and studying the behaviour thereof as the different parameters vary. The effects that the different environmental parameters have on the rate of the detected neutrons can be conveniently implemented in the data processing software algorithm (block 22), thereby making such algorithm extremely powerful in terms of the resulting precision and indications on the presence of hydrogen in the surrounding area of the measurement devices.

In particular, in order to determine/estimate the quantities of hydrogen present on/in the soil, the data processing software algorithm (block 22) can conveniently cross-reference the neutron count data with the air humidity, atmospheric pressure data, and possibly other anisotropy factors.

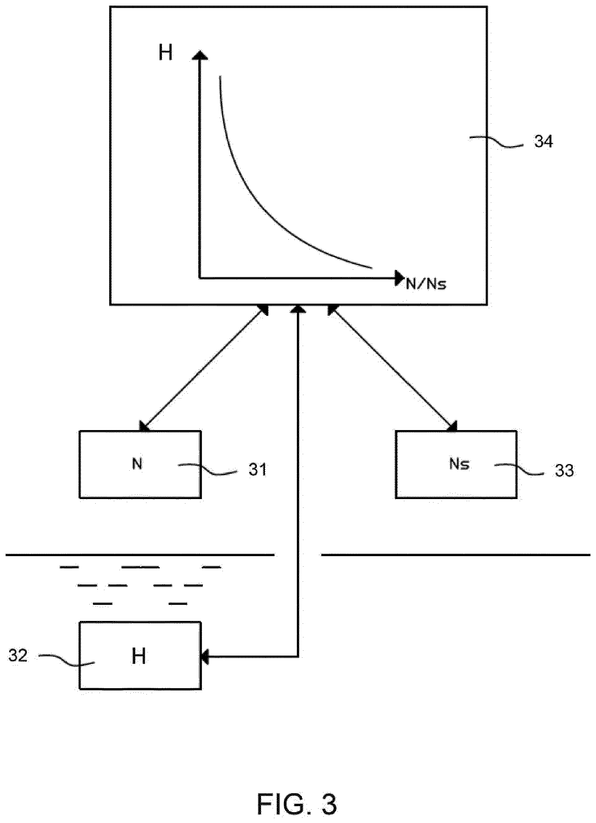

An example of an operating principle that can be used to estimate the quantities of hydrogen present on/in the soil is schematically shown in Figure 3, in which it can be seen that a number N (denoted with 31) of secondary cosmic ray neutrons, which is measured near a soil containing a certain quantity of hydrogen H (denoted with 32) and is normalized with respect to a value Ns (denoted with 33) of secondary cosmic ray neutrons measured in the presence of soil without hydrogen, is linked to the saturation value of the hydrogen in the soil according to a certain relationship that can take into account one or more parameters and that is represented in Figure 3, for merely exemplary purposes, as an inverse proportionality relation (denoted overall with 34). Therefore, in the presence of a leak of hydrocarbons or of substances containing hydrocarbons, the number of neutrons measured diminishes with respect to the surrounding soil.

With regard to the data acquisition step (block 21 in Figure 2), the georeferencing data of the pipeline for transport of hydrocarbons or of substances containing hydrocarbons can conveniently comprise one or more georeferenced maps of said pipeline.

Conveniently, such georeferencing data can be provided by the administration/body/company operating the pipeline. The georeferenced maps can be provided, for example, in Gauss Boaga 1984 32N or 33N format and conveniently show all the pipings of interest, either supply lines or secondary ones.

Furthermore, the method 2 conveniently also includes:

- carrying out secondary cosmic measurements (preferably, as above explained, neutron quantity measurements) at different positions on the earth's surface, wherein said measurements are, as explained above, georeferenced (and, conveniently, also associated with further data indicative of the date and time of performance of the measurements and the atmospheric pressure and air humidity detected concurrently with the measurements); and
- creating one or more databases containing data indicative of the georeferenced secondary cosmic radiation measurements performed and, conveniently, also the further data associated with said measurements.

Thereby, referring to the step of acquiring data (block 21 in Figure 2), acquiring data indicative of georeferenced secondary cosmic radiation measurements conveniently comprises:

- searching on said database(s) and selecting data indicative of secondary cosmic radiation measurements carried out in a region of the earth's surface where the pipeline for transport of hydrocarbons or of substances containing hydrocarbons to be inspected extends (i.e. a region corresponding to the georeferencing data (i.e. the geographical coordinates) of said pipeline); and
- acquiring the selected data.

Preferably, the step of searching for and selecting data indicative of secondary cosmic radiation measurements carried out in the region of the earth's surface where the pipeline for transport of hydrocarbons or of substances containing hydrocarbons extends comprises:

- for each secondary cosmic radiation measurement carried out in said region,

    - controlling meteorological and/or environmental conditions in, and/or conditions of secondary cosmic radiation incident on, said region simultaneously to execution of said measurement and,
    - if the meteorological and/or environmental and/or incident secondary cosmic radiation conditions meet predefined requirements, selecting the data indicative of said measurement.

Selecting the measurements carried out based on the control of the meteorological and/or environmental and/or incident secondary cosmic radiation conditions allows:

- rejecting the measurements carried out in meteorological and/or environmental and/or incident secondary cosmic radiation conditions that are not suitable for, or even interfering with, the estimate of the quantity of hydrogen present on/in the soil (for instance, measurements carried out during high humidity and/or low pressure periods, intense rain and snowfalls);
- selecting only measurements carried out with meteorological and/or environmental and/or incident secondary cosmic radiation conditions that are suitable for estimating the quantity of hydrogen present on/in the soil (for instance, measurements carried out during low humidity and high pressure periods, clear weather and/or dry climate);
- selecting only measurements carried out with average incident secondary cosmic radiation conditions; and
- possibly carrying out suitable corrections depending on the secondary cosmic radiation incident on the region at the date and time of the measurement execution.

Thereby reliability and precision of the results obtained are improved thanks to the implementation of the method 2. Conveniently, the control of meteorological and/or environmental and/or incident secondary cosmic radiation conditions may be carried out based on data and information retrieved from suitable data banks.

Furthermore, with regard to the step of generating the georeferenced digital map (block 22 in Figure 2), as explained above, in said georeferenced digital map the pipeline for transport of hydrocarbons or of substances containing hydrocarbons is represented together with the estimated quantities of hydrogen present on/in the soil (for example, using different chromatic/intensity levels suitably scaled and accompanied by caption). Thereby easily comprehensible graphical representations are obtained which allow an operator to recognise at a glance where possible leaks are located.

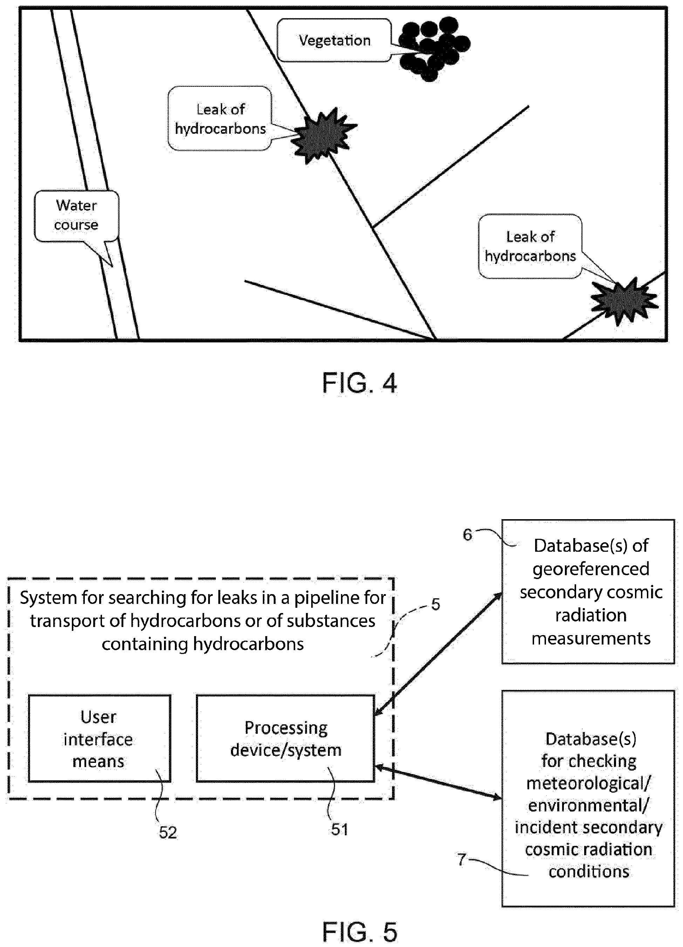

In this respect, an example of a georeferenced digital map generated thanks to the method 2 is shown in Figure 4.

In particular, on the map of Figure 4, which shows an example of a pipeline for transport of hydrocarbons and estimated quantities of hydrogen present on/in the soil in the region in which said pipeline extends, the leaks detected by the execution of the method 2 are indicated, as well as other elements identified by processing the secondary cosmic radiation measurements.

Thanks to the use of the method 2, it is therefore possible to dispatch an operator in the identified geographical spots for a final search on the field (carried out, for example, by means of special portable instrumentation) in order to find the leak, or better to identify the cause of the leak and, therefore remove it.

Conveniently, thanks to the use of the method 2, it is possible to also produce a digital document containing the list of the detected leaks provided with respective georeferencing data, according to the severity of the leak. Such document can be conveniently loaded on suitable systems installed on-board the team vehicles searching for the leaks of hydrocarbons or of substances containing hydrocarbons so as to allow guiding, through satellite navigator integrated in these vehicles, said teams searching for the leaks of hydrocarbons or of substances containing hydrocarbons directly where leaks are located, starting from the most severe ones.

The method 2 can be conveniently implemented by means of a suitable system. In this respect, a system for searching for leaks in a pipeline for transport of hydrocarbons or of substances containing hydrocarbons (denoted as a whole by 5) designed to carry out the method 2, in particular including a processing device/system 51 (for instance, realised by means of a computer, a server, a computer/server network, or a processing system based on cloud computing architecture) programmed (by means of one or more suitable software programmes) to implement the method 2 is schematically shown in Figure 5.

Preferably, the system 5 also includes user interface means 52 designed to enable a user to input data and/or give commands (for instance through a keyboard and/or a mouse and/or a touch screen) and to display the results of searches carried out, in particular to display on a screen the georeferenced digital maps with the indication of the identified leaks.

The processing device/system 51 is conveniently configured to connect (for instance through one or more telecommunication networks, preferably the Internet network):

- to one or more databases 6 which store data indicative of georeferenced secondary cosmic radiation measurements at different positions on the earth's surface, in order to carry out the search, selection and acquisition of data of interest in the search for leaks in a specific pipeline for transport of hydrocarbons or of substances containing hydrocarbons; and,
- preferably, also to one or more additional databases 7 which store data that enable the processing device/system 51 to carry out checking of meteorological and/or environmental and/or incident secondary cosmic radiation conditions.

Furthermore, even if not shown in Figure 5, the system 5 can conveniently comprise also a plurality of measurement devices such as the measurement device 1 shown in Figure 1 and previously described, in order to carry out the secondary cosmic radiation measurements on the earth's surface. In particular, as explained above, such measurement devices may be conveniently installed in a fixed manner at predefined positions and/or on-board vehicles (or, more generally, any type of vehicle or transport means) or aircrafts/drones, with a driver/pilot, or remotely- or autonomously guided.

The innovative characteristics and the technical advantages of the present invention are immediately clear to a person skilled in the art from the above description.

In this regard, it is important to emphasise, firstly, the fact that the present invention teaches how to exploit, in a totally innovative and inventive way, for a completely new application (i.e. the detection of leaks in pipelines for transport of hydrocarbons or of substances containing hydrocarbons), a now mature technology such as the one of the detection of the quantity of hydrogen present on/in the soil based on secondary cosmic radiation measurements (in particular, secondary cosmic ray neutron count measurements), a technology that until now has only been used for totally different applications.

Furthermore, it is worth drawing the attention on the fact that the present invention allows to dramatically reduce times and costs for searching for a leak, for example of methane, if compared to the presently used methods and techniques. The present invention allows, in fact, to monitor a pipeline for transport of hydrocarbons or of substances containing hydrocarbons in very short times if compared to those required to operators searching on the spot along the entire extension of the pipeline (as previously explained, with the present invention operators are only employed in the final step of identifying and repairing the leaks at the geographical positions identified using, indeed, the present invention).

More specifically, the present invention makes it possible to reduce the times and costs for searching for leaks of hydrocarbons or substances containing hydrocarbons, to increase the reliability and precision of the search and to reduce the presence of leaks in a pipeline, compared to the methodologies and techniques currently used for searching for leaks (specifically, methodologies/techniques based on the use of hand tools, electronic "noses", tracer gases, step tests, etc.) and to be applicable to all types of hydrocarbons and of substances containing hydrocarbons. Also, the present invention can be advantageously exploited in synergy with such presently known methods/techniques for searching for leaks.

Furthermore, the present invention offers the following advantages:

- high reliability and high precision in identifying and locating leaks;
- possibility to estimate the dimensions of the identified leaks, as well as to provide possible inconveniences resulting from such leaks;
- increased speed of response in the identification and classification of leaks with a consequent reduction in costs;
- drastic reduction of the presence of leaks in a pipeline for transport of hydrocarbons or of substances containing hydrocarbons;
- immediate imaging of leaks on a georeferenced digital map;

- no limit of extension;
- high-resolution identified points (e.g., about 5 m);
- non-invasive technology, with no contact with the soil and no damage for the environment;
- no inconvenience for end users;
- measurement devices that can be realised according to different methods (specifically, fixed-type and/or mobile-type measurement devices which can be installed on any type of transport means);
- reduction of costs, risks and labour needed to search for and repair pipelines;
- cost reduction for maintenance, working, products used, etcetera;
- reduction of costs for the supply of hydrocarbons or of substances containing hydrocarbons, for example methane gas, to utilities;
- brief amortisation period;
- no bureaucracy.

Finally, referring again to the previous hypothesis of searching for leaks in a gas pipeline stretching about 500 km, attention is drawn to the fact that the present invention in that case would entail a significantly lower overall cost compared to 18,000/100,000€ necessary with the currently known methodologies/techniques.
In conclusion, it is important to note that, while the above described invention refers in particular to very specific embodiments, it must not be intended as limited to such embodiments, including within its scope all the variants, modifications or simplifications covered by the enclosed Claims.

**Claims**

1. Method (2) for searching for leaks in pipelines for transport of hydrocarbons or of substances containing hydrocarbons, comprising:

   • acquiring data related to a pipeline for the transport of hydrocarbons or of substances containing hydrocarbons;
   • performing a processing of the acquired data; and
   • detecting and locating one or more leaks in the pipeline for transport of hydrocarbons or of substances containing hydrocarbons based on the processing carried out;

   **characterised in that**:

   • acquiring data related to a pipeline for transport of hydrocarbons or of substances containing hydrocarbons includes acquiring pipeline georeferencing data and data indicative of georeferenced secondary cosmic radiation measurements performed in a region of the earth's surface in which said pipeline extends (block 21);

   • performing a processing of the acquired data includes generating, based on the processing performed, a georeferenced digital map representing the pipeline for transport of hydrocarbons or of substances containing hydrocarbons and estimated quantities of hydrogen present on/in the soil in the region in which said pipeline extends (block 22); and
   • detecting and locating one or more leaks in the pipeline for transport of hydrocarbons or of substances containing hydrocarbons includes detecting and locating the leak(s) based on the generated georeferenced digital map (block 23).

2. The method of Claim 1, wherein processing the acquired data includes estimating the quantities of hydrogen present on/in the soil in the region in which the pipeline for transport of hydrocarbons or of substances containing hydrocarbons extends based on the data indicative of the georeferenced secondary cosmic radiation measurements carried out in said region, using measurement correction factors taking account of:

   • radial sensitivity and anisotropy effects of the georeferenced secondary cosmic radiation measurements carried out;
   • air humidity, atmospheric pressure and intensity of incident secondary cosmic radiation values detected simultaneously with execution of said measurements in the region in which the pipeline extends or in positions of the earth's surface in which said measurements are carried out.

3. The method according to Claim 1 or 2, further comprising:

   • carrying out secondary cosmic radiation measurements in different positions on the earth's surface;
   • georeferencing the secondary cosmic radiation measurements carried out; and
   • creating a database (6) containing data indicative of the secondary cosmic radiation measurements carried out and georeferenced;

   wherein acquiring data indicative of georeferenced secondary cosmic radiation measurements carried out in a region of the earth's surface in which the pipeline for transport of hydrocarbons or of substances containing hydrocarbons extends includes:

   • searching in said database (6) and selecting, based on the georeferencing data of the pipeline, data indicative of secondary cosmic radiation measurements carried out in said region of the earth's surface in which said pipeline extends; and
• acquiring the selected data.

4. The method of Claim 3, wherein searching in said database (6) and selecting, based on the georeferencing data of the pipeline, data indicative of secondary cosmic radiation measurements carried out in the region of the earth's surface in which said pipeline extends includes:

    • for each secondary cosmic radiation measurement carried out in said region,

        - checking meteorological and/or environmental conditions in, and/or secondary cosmic radiation conditions incident on, said region simultaneously with the execution of said measurement and,
        - if the meteorological and/or environmental and/or incident secondary cosmic radiation conditions meet predefined requirements, selecting the data indicative of said measurement.

5. The method according to Claim 3 or 4, wherein the secondary cosmic radiation measurements are carried out by means of measurement devices (1) which are installed:

    • in a fixed way in respective positions on the earth's surface; and/or
    • on board vehicles and/or aircraft that move/fly on/over the earth's surface;
    wherein each measurement device (1) comprises a respective satellite locating device (12) to determine, for each secondary cosmic radiation measurement carried out by said measurement device (1), a corresponding position in which said measurement is carried out;
    and wherein georeferencing the secondary cosmic radiation measurements carried out includes associating, by means of each measurement device (1), the secondary cosmic radiation measurements carried out by said measurement device (1) with the corresponding positions determined by the respective satellite locating device (12).

6. The method of Claim 5, wherein georeferencing the secondary cosmic radiation measurements carried out includes associating, by means of each measurement device (1), each secondary cosmic radiation measurement carried out by said measurement device (1) with:

    • the corresponding position determined by the respective satellite locating device (12); and
    • a date and a time in which said measurement has been carried out.

7. The method according to Claim 5 or 6, wherein each measurement device (1):

    • also comprises a respective atmospheric pressure sensor (15) and a respective air humidity sensor (16) to sense, for each secondary cosmic radiation measurement carried out by said measurement device (1), corresponding atmospheric pressure and air humidity values; and
    • is configured to associate each secondary cosmic radiation measurement carried out by said measurement device (1) also with the corresponding atmospheric pressure and air humidity values sensed by the respective atmospheric pressure (15) and air humidity sensors (16).

8. The method of Claim 7, wherein the secondary cosmic radiation measurements are measurements that count neutrons of secondary cosmic rays.

9. The method according to any preceding Claim, wherein the leaks in the pipeline for transport of hydrocarbons or of substances containing hydrocarbons are detected and located by carrying out an analysis of the estimated quantities of hydrogen present on/in the soil represented in the georeferenced digital map at, or near to, said pipeline.

10. The method according to any preceding Claim, wherein the georeferencing data of the pipeline for transport of hydrocarbons or of substances containing hydrocarbons comprise one or more georeferenced maps of said pipeline.

11. System (5) configured to carry out the method (2) for searching for leaks in pipelines for transport of hydrocarbons or of substances containing hydrocarbons as claimed in any preceding Claim;
said system (5) comprising a processing device/system (51) configured for:

    • acquiring data related to a pipeline for transport of hydrocarbons or of substances containing hydrocarbons;
    • performing a processing of the acquired data; and
    • detecting and locating one or more leaks in the pipeline for transport of hydrocarbons or of substances containing hydrocarbons based on the processing carried out;

    **characterised in that** the processing device/system (51) is programmed for

    • acquiring pipeline georeferencing data and data indicative of georeferenced secondary cosmic radiation measurements performed in a region of the earth's surface in which said pipeline extends (block 21);
• generating, based on the processing of the acquired data, a georeferenced digital map representing the pipeline for transport of hydrocarbons or of substances containing hydrocarbons and estimated quantities of hydrogen present on/in the soil in the region in which said pipeline extends (block 22); and
• detecting and locating the leak(s) in the pipeline for transport of hydrocarbons or of substances containing hydrocarbons based on the generated georeferenced digital map (block 23).

12. Computer program product comprising portions of software code executable by a processing device/system (51) for implementing the method (2) for searching for leaks in pipelines for transport of hydrocarbons or of substances containing hydrocarbons as claimed in any of claims 1-10.

**Patentansprüche**

1. Verfahren (2) zur Suche nach Lecks in Rohrleitungen für den Transport von Kohlenwasserstoffen oder kohlenwasserstoffhaltigen Substanzen, umfassend:

- Erfassen von Daten, die sich auf eine Pipeline für den Transport von Kohlenwasserstoffen oder kohlenwasserstoffhaltigen Stoffen beziehen;
- Durchführen einer Verarbeitung der erfassten Daten; und
- Erkennen und Lokalisieren eines oder mehrerer Lecks in der Pipeline für den Transport von Kohlenwasserstoffen oder kohlenwasserstoffhaltigen Substanzen auf der Grundlage der durchgeführten Verarbeitung;

**dadurch gekennzeichnet, dass**:

- das Erfassen von Daten, die sich auf eine Pipeline für den Transport von Kohlenwasserstoffen oder kohlenwasserstoffhaltigen Substanzen beziehen, das Erfassen von Pipeline-Georeferenzierungsdaten und Daten umfasst, die auf georeferenzierte sekundäre kosmische Strahlungsmessungen hinweisen, die in einem Bereich der Erdoberfläche durchgeführt wurden, in dem sich die Pipeline erstreckt (Block 21);
- Durchführen einer Verarbeitung der erfassten Daten, einschließlich des Erzeugens, basierend auf der durchgeführten Verarbeitung, einer georeferenzierten digitalen Karte, die die Pipeline für den Transport von Kohlenwasserstoffen oder von kohlenwasserstoffhaltigen Substanzen und geschätzte Mengen von Wasserstoff, die auf/in dem Boden in der Region vorhanden sind, in der sich die Pipeline erstreckt, darstellt (Block 22); und
- das Erkennen und Lokalisieren eines oder mehrerer Lecks in der Pipeline für den Transport von Kohlenwasserstoffen oder kohlenwasserstoffhaltigen Substanzen das Erkennen und Lokalisieren des Lecks (der Lecks) auf der Grundlage der erzeugten georeferenzierten digitalen Karte umfasst (Block 23).

2. Verfahren nach Anspruch 1, wobei das Verarbeiten der erfassten Daten das Schätzen der Wasserstoffmengen auf/in dem Boden in der Region, in der sich die Pipeline für den Transport von Kohlenwasserstoffen oder kohlenwasserstoffhaltigen Substanzen erstreckt, auf der Grundlage der Daten, die die georeferenzierten sekundären kosmischen Strahlungsmessungen anzeigen, die in dieser Region durchgeführt wurden, unter Verwendung von Messkorrekturfaktoren umfasst, die Folgendes berücksichtigen

- radiale Empfindlichkeit und Anisotropieeffekte der durchgeführten georeferenzierten Messungen der sekundären kosmischen Strahlung;
- der Luftfeuchtigkeit, des atmosphärischen Drucks und der Intensität der einfallenden sekundären kosmischen Strahlung, die gleichzeitig mit der Durchführung der genannten Messungen in der Region, in der sich die Rohrleitung erstreckt, oder in den Positionen der Erdoberfläche, in denen die genannten Messungen durchgeführt werden, ermittelt wurden.

3. Verfahren nach Anspruch 1 oder 2, ferner umfassend:

- Durchführen von Messungen der sekundären kosmischen Strahlung an verschiedenen Positionen auf der Erdoberfläche,
- Georeferenzierung der durchgeführten sekundären kosmischen Strahlungsmessungen; und
- Erzeugen einer Datenbank (6), die Daten enthält, die für die durchgeführten und georeferenzierten sekundären kosmischen Strahlungsmessungen bezeichnend sind; wobei das Erfassen von Daten, die auf georeferenzierte sekundäre kosmische Strahlungsmessungen hinweisen, die in einem Bereich der Erdoberfläche durchgeführt wurden, in dem sich die Pipeline für den Transport von Kohlenwasserstoffen oder kohlenwasserstoffhaltigen Substanzen erstreckt, Folgendes umfasst:
- Suchen in der Datenbank (6) und Auswählen, basierend auf den Georeferenzierungsdaten der Pipeline, Daten, die für sekundäre kosmische Strahlungsmessungen, die in der Region der Erdoberfläche, in der sich die Pipeline erstreckt, bezeichnend sind,
und
- das Erfassen der ausgewählten Daten.

4. Verfahren nach Anspruch 3, wobei das Durchsuchen der Datenbank (6) und das Auswählen von Daten, die auf sekundäre kosmische Strahlungsmessungen hinweisen, die in der Region der Erdoberfläche, in der sich die Pipeline erstreckt, durchgeführt wurden, auf der Grundlage der Georeferenzierungsdaten der Pipeline umfasst:

- für jede sekundäre kosmische Strahlungsmessung, die in dieser Region durchgeführt wurde,
- die Überprüfung der meteorologischen Bedingungen und/oder der Umweltbedingungen in diesem Gebiet und/oder der Bedingungen der sekundären kosmischen Strahlung, die auf dieses Gebiet einfallen, gleichzeitig mit der Durchführung dieser Messung und,
- wenn die meteorologischen Bedingungen und/oder die Umgebungsbedingungen und/oder die Bedingungen der einfallenden sekundären kosmischen Strahlung den vordefinierten Anforderungen entsprechen, die Auswahl der Daten, die für diese Messung kennzeichnend sind.

5. Verfahren nach Anspruch 3 oder 4, wobei die Messungen der sekundären kosmischen Strahlung mit Hilfe von Messgeräten (1) durchgeführt werden, die installiert sind:

- ortsfest an entsprechenden Positionen auf der Erdoberfläche; und/oder
- an Bord von Fahrzeugen und/oder Flugzeugen, die sich auf/über der Erdoberfläche bewegen/fliegen;
wobei jede Messvorrichtung (1) eine jeweilige Satellitenortungsvorrichtung (12) umfasst, um für jede sekundäre kosmische Strahlungsmessung, die von der Messvorrichtung (1) durchgeführt wird, eine entsprechende Position zu bestimmen, an der die Messung durchgeführt wird; und wobei die Georeferenzierung der durchgeführten sekundären kosmischen Strahlungsmessungen die Verknüpfung mittels jeder Messvorrichtung (1) der sekundären kosmischen Strahlungsmessungen, die von der Messvorrichtung (1) durchgeführt wurden mit den entsprechenden Positionen, die durch die jeweiligen Satellitenortungsvorrichtung (12) bestimmt wurden, umfasst.

6. Verfahren nach Anspruch 5, wobei die Georeferenzierung der durchgeführten sekundären kosmischen Strahlungsmessungen das Zuordnen jeder von der Messvorrichtung (1) durchgeführten sekundären kosmischen Strahlungsmessung mittels jeder Messvorrichtung (1) zu:

- der entsprechenden Position, die von der jeweiligen Satellitenortungsvorrichtung (12) bestimmt wurde, und
- einem Datum und einer Uhrzeit, zu der die Messung durchgeführt wurde.

7. Verfahren nach Anspruch 5 oder 6, wobei jede Messvorrichtung (1):

- auch einen jeweiligen atmosphärischen Drucksensor (15) und einen jeweiligen Luftfeuchtigkeitssensor (16) umfasst, um für jede sekundäre kosmische Strahlungsmessung, die von der Messvorrichtung (1) durchgeführt wird, entsprechende atmosphärische Druck- und Luftfeuchtigkeitswerte zu erfassen; und
- konfiguriert ist, um jede sekundäre kosmische Strahlungsmessung, die von der Messvorrichtung (1) durchgeführt wird, auch mit den entsprechenden atmosphärischen Druck- und Luftfeuchtigkeitswerten zu verknüpfen, die von den jeweiligen atmosphärischen Druck- (15) und Luftfeuchtigkeitssensoren (16) erfasst werden.

8. Verfahren nach Anspruch 7, wobei die Messungen der sekundären kosmischen Strahlung Messungen sind, die Neutronen der sekundären kosmischen Strahlung zählen.

9. Verfahren nach einem der vorhergehenden Ansprüche, wobei die Lecks in der Pipeline für den Transport von Kohlenwasserstoffen oder kohlenwasserstoffhaltigen Substanzen durch die Durchführung einer Analyse der geschätzten Mengen an Wasserstoff, die auf/in dem Boden vorhanden sind, der in der georeferenzierten digitalen Karte an der Pipeline oder in deren Nähe dargestellt ist, entdeckt und lokalisiert werden.

10. Verfahren nach einem der vorhergehenden Ansprüche, wobei die Georeferenzierungsdaten der Pipeline für den Transport von Kohlenwasserstoffen oder kohlenwasserstoffhaltigen Substanzen eine oder mehrere georeferenzierte Karten der Pipeline umfassen.

11. System (5), das so konfiguriert ist, dass es das Verfahren (2) zur Suche von Lecks in Rohrleitungen für den Transport von Kohlenwasserstoffen oder kohlenwasserstoffhaltigen Substanzen nach einem der vorhergehenden Ansprüche durchführt;
wobei das System (5) eine Verarbeitungsvorrichtung/ein Verarbeitungssystem (51) umfasst, das konfiguriert ist für:

- Erfassen von Daten, die sich auf eine Pipeline für den Transport von Kohlenwasserstoffen oder kohlenwasserstoffhaltigen Substanzen beziehen;
- Durchführen einer Verarbeitung der erfassten Daten; und
- Erkennen und Lokalisieren eines oder mehrerer Lecks in der Pipeline für den Transport von Kohlenwasserstoffen oder kohlenwasserstoffhaltigen Substanzen auf der Grundlage der durchgeführten Verarbeitung;

**dadurch gekennzeichnet, dass** die Verarbeitungsvorrichtung/das System (51) programmiert ist für

- Erfassen von Pipeline-Georeferenzierungsdaten und Daten, die georeferenzierte sekundäre kosmische Strahlungsmessungen anzeigen, die in einem Bereich der Erdoberfläche durchgeführt wurden, in dem sich die Pipeline erstreckt (Block 21);
- Erzeugen, basierend auf der Verarbeitung der erfassten Daten, einer georeferenzierten digitalen Karte, die die Pipeline für den Transport von Kohlenwasserstoffen oder kohlenwasserstoffhaltigen Substanzen und geschätzte Mengen an Wasserstoff, die auf/in dem Boden in der Region, in der sich die Pipeline erstreckt, vorhanden sind, darstellt (Block 22); und
- Erkennen und Lokalisieren des Lecks/der Lecks in der Pipeline für den Transport von Kohlenwasserstoffen oder kohlenwasserstoffhaltigen Stoffen auf der Grundlage der erzeugten georeferenzierten digitalen Karte (Block 23).

**12.** Computerprogrammprodukt, das Teile eines Softwarecodes umfasst, der von einer Verarbeitungsvorrichtung/einem Verarbeitungssystem (51) ausführbar ist, um das Verfahren (2) zum Suchen von Lecks in Pipelines für den Transport von Kohlenwasserstoffen oder kohlenwasserstoffhaltigen Substanzen gemäß einem der Ansprüche 1-10 zu implementieren.

**Revendications**

**1.** Procédé (2) pour rechercher des fuites dans des pipelines destinés au transport d'hydrocarbures ou de substances contenant des hydrocarbures, comprenant :

• l'acquisition de données concernant un pipeline destiné au transport d'hydrocarbures ou de substances contenant des hydrocarbures ;
• la mise en oeuvre d'un traitement des données acquises ; et
• la détection et la localisation d'une ou plusieurs fuites dans le pipeline destiné au transport d'hydrocarbures ou de substances contenant des hydrocarbures sur la base du traitement mis en oeuvre ;

**caractérisé en ce que** :

• l'acquisition de données concernant un pipeline destiné au transport d'hydrocarbures ou de substances contenant des hydrocarbures comprend l'acquisition de données de géoréférencement du pipeline et de données indicatives de mesures de rayonnements cosmiques secondaires géoréférencés réalisées dans une région de la surface terrestre dans laquelle s'étend ledit pipeline (bloc 21) ;
• la mise en oeuvre d'un traitement des données acquises comprend la génération, sur la base du traitement mis en oeuvre, d'une carte numérique géoréférencée représentant le pipeline destiné au transport d'hydrocarbures ou de substances contenant des hydrocarbures et les quantités estimées d'hydrogène présent sur/dans le sol dans la région dans laquelle s'étend ledit pipeline (bloc 22) ; et
• la détection et la localisation d'une ou plusieurs fuites dans le pipeline destiné au transport d'hydrocarbures ou de substances contenant des hydrocarbures comprend la détection et la localisation de la ou des fuites sur la base de la carte numérique géoréférencée générée (bloc 23).

**2.** Procédé selon la revendication 1, dans lequel le traitement des données acquises comprend l'estimation des quantités d'hydrogène présent sur/dans le sol dans la région dans laquelle s'étend le pipeline destiné au transport d'hydrocarbures ou de substances contenant des hydrocarbures sur la base des données indicatives des mesures de rayonnements cosmiques secondaires géoréférencés réalisées dans ladite région, utilisant des facteurs de correction de mesure prenant en compte :

• les effets d'anisotropie et de sensibilité radiales des mesures de rayonnements cosmiques secondaires géoréférencés réalisées ;
• l'humidité de l'air, la pression atmosphérique et l'intensité des valeurs de rayonnements cosmiques secondaires incidents détectées simultanément à l'exécution desdites mesures dans la région dans laquelle s'étend le pipeline ou à des positions de la surface terrestre dans lesquelles lesdites mesures sont réalisées.

**3.** Procédé selon la revendication 1 ou 2, comprenant en outre :

• la mise en oeuvre de mesures de rayonnements cosmiques secondaires à différentes positions sur la surface terrestre ;

• le géoréférencement des mesures de rayonnements cosmiques secondaires réalisées ; et

• la création d'une base de données (6) contenant des données indicatives des mesures de rayonnements cosmiques secondaires réalisées et géoréférencées ;

dans lequel l'acquisition de données indicatives de mesures de rayonnements cosmiques secondaires géoréférencées réalisées dans une région de la surface terrestre dans laquelle s'étend le pipeline destiné au transport d'hydrocarbures ou de substances contenant des hydrocarbures comprend :

• la recherche dans ladite base de données (6) et la sélection, sur la base des données de géoréférencement du pipeline, de données indicatives de mesures de rayonnements cosmiques secondaires réalisées dans ladite région de la surface terrestre dans laquelle s'étend ledit pipeline ; et

• l'acquisition des données sélectionnées.

4. Procédé selon la revendication 3, dans lequel la recherche dans ladite base de données (6) et la sélection, sur la base des données de géoréférencement du pipeline, de données indicatives de mesures de rayonnements cosmiques secondaires réalisées dans la région de la surface terrestre dans laquelle s'étend ledit pipeline comprend :

• pour chaque mesure de rayonnements cosmiques secondaires réalisée dans ladite région,

- la vérification des conditions météorologiques et/ou environnementales dans, et/ou des conditions de rayonnements cosmiques secondaires incidents sur, ladite région simultanément à l'exécution de ladite mesure, et

- si les conditions météorologiques et/ou environnementales et/ou de rayonnements cosmiques secondaires incidents satisfont à des exigences prédéfinies, la sélection des données indicatives de ladite mesure.

5. Procédé selon la revendication 3 ou 4, dans lequel les mesures de rayonnements cosmiques secondaires sont réalisées au moyen de dispositifs de mesure (1) qui sont installés :

• de façon fixe à des positions respectives sur la surface terrestre ; et/ou

• en étant embarqués sur des véhicules et/ou aéronefs qui se déplacent/volent sur/au-dessus de la surface terrestre ;

dans lequel chaque dispositif de mesure (1) comprend un dispositif de localisation par satellite respectif (12) pour déterminer, pour chaque mesure de rayonnements cosmiques secondaires réalisée par ledit dispositif de mesure (1), une position correspondante dans laquelle ladite mesure est réalisée ;

et dans lequel le géoréférencement des mesures de rayonnements cosmiques secondaires réalisées comprend l'association, au moyen de chaque dispositif de mesure (1), des mesures de rayonnements cosmiques secondaires réalisées par ledit dispositif de mesure (1) avec les positions correspondantes déterminées par le dispositif de localisation par satellite respectif (12).

6. Procédé selon la revendication 5, dans lequel le géoréférencement des mesures de rayonnements cosmiques secondaires réalisées comprend l'association, au moyen de chaque dispositif de mesure (1), de chaque mesure de rayonnements cosmiques secondaires réalisée par ledit dispositif de mesure (1) avec :

• la position correspondante déterminée par le dispositif de localisation par satellite respectif (12) ; et

• une date et une heure auxquels ladite mesure a été réalisée.

7. Procédé selon la revendication 5 ou 6, dans lequel chaque dispositif de mesure (1) :

• comprend aussi un capteur de pression atmosphérique respectif (15) et un capteur d'humidité de l'air respectif (16) pour que soient détectées, pour chaque mesure de rayonnements cosmiques secondaires réalisée par ledit dispositif de mesure (1), des valeurs correspondantes de pression atmosphérique et d'humidité de l'air ; et

• est configuré pour associer chaque mesure de rayonnement cosmique secondaire réalisée par ledit dispositif de mesure (1) également avec les valeurs correspondantes de pression atmosphérique et d'humidité de l'air détectées par les capteurs respectifs de pression atmosphérique (15) et d'humidité de l'air (16).

8. Procédé selon la revendication 7, dans lequel les mesures de rayonnements cosmiques secondaires sont des mesures qui comptent les neutrons de rayons cosmiques secondaires.

9. Procédé selon l'une quelconque des revendications précédentes, dans lequel les fuites dans le pipeline destiné au transport d'hydrocarbures ou de substances contenant des hydrocarbures sont détectées et localisées par mise en oeuvre d'une analyse des quantités estimées d'hydrogène présent sur/dans le sol représenté dans la carte numérique géoréférencée au niveau, ou à proximité, dudit pipeline.

10. Procédé selon l'une quelconque des revendications précédentes, dans lequel les données de géoréférencement du pipeline destiné au transport d'hydrocarbures ou de substances contenant des hydrocarbures comprennent une ou plusieurs cartes géoréférencées dudit pipeline.

11. Système (5) configuré pour mettre en oeuvre le procédé (2) pour rechercher des fuites dans des pipelines destinés au transport d'hydrocarbures ou de substances contenant des hydrocarbures selon l'une quelconque des revendications précédentes ; ledit système (5) comprenant un dispositif/système de traitement (51) configuré pour :

　　• acquérir des données concernant un pipeline destiné au transport d'hydrocarbures ou de substances contenant des hydrocarbures ;
　　• mettre en oeuvre un traitement des données acquises ; et
　　• détecter et localiser une ou plusieurs fuites dans le pipeline destiné au transport d'hydrocarbures ou de substances contenant des hydrocarbures sur la base du traitement mis en oeuvre ;

　　**caractérisé en ce que** le dispositif/système de traitement (51) est programmé pour

　　• acquérir des données de géoréférencement du pipeline et des données indicatives de mesures de rayonnements cosmiques secondaires géoréférencés réalisées dans une région de la surface terrestre dans laquelle s'étend ledit pipeline (bloc 21) ;
　　• générer, sur la base du traitement mis en oeuvre, une carte numérique géoréférencée représentant le pipeline destiné au transport d'hydrocarbures ou de substances contenant des hydrocarbures et les quantités estimées d'hydrogène présent sur/dans le sol dans la région dans laquelle s'étend ledit pipeline (bloc 22) ; et
　　• détecter et localiser la ou les fuites dans le pipeline destiné au transport d'hydrocarbures ou de substances contenant des hydrocarbures sur la base de la carte numérique géoréférencée générée (bloc 23).

12. Produit de programme informatique comprenant des fragments de code logiciel exécutable par un dispositif/système de traitement (51) pour mettre en application le procédé (2) pour rechercher des fuites dans des pipelines destinés au transport d'hydrocarbures ou de substances contenant des hydrocarbures selon l'une quelconque des revendications 1 à 10.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000015920
- EP 1416258 A1
- US 5543623 A
- US 2940302 A
- EP 3767045 A1